# EUROPEAN PATENT SPECIFICATION

(11) **EP 4 491 347 B1**
(45) Date of publication and mention of the grant of the patent: **11.03.2026**
(21) Application number: 24181584.4
(22) Date of filing: 12.06.2024
(51) Int. Cl.: B25J 9/06, B25J 18/06, B25J 9/10, G01N 21/954

(54) **INSERTION TOOL**
EINSETZWERKZEUG
OUTIL D'INSERTION

(30) Priority: 12.07.2023 GB 202310683
(43) Date of publication of application: 15.01.2025
(73) Proprietor: Rolls-Royce plc, London N1 9FX (GB)
(72) Inventor: Harrison, Liam D, Derby DE24 8BJ (GB); Kennedy, Ian, Derby DE24 8BJ (GB)
(74) Representative: Rolls-Royce plc

(56) References cited:
- EP-A1- 4 091 774
- US-B2- 10 670 538
- TRONCOSO DAVID ALATORRE ET AL: "A Continuum Robot for Remote Applications: From Industrial to Medical Surgery With Slender Continuum Robots", IEEE ROBOTICS & AUTOMATION MAGAZINE, IEEE SERVICE CENTER, PISCATAWAY, NJ, US, vol. 30, no. 3, 5 December 2022 (2022-12-05), pages 94 - 105, XP011949779, ISSN: 1070-9932, [retrieved on 20221205], DOI: 10.1109/MRA.2022.3223220

## Description

### FIELD

The invention relates to a feed mechanism for inserting a flexible robotic arm into a body or a workspace. In particular, the invention relates to a feed mechanism in which the diameter of the flexible robotic arm can be changed.

### BACKGROUND

Repair and inspection of complex objects such as gas turbine engines, nuclear power plants, underground cabling, pipes and equipment for oil and gas processing is of growing importance as these industries grow. In all of these examples there are issues with the ease of access to perform the repair and inspection steps; this is either because of confined access, dangerous environments, complexities or cost in removing the equipment. To overcome these limitations there has been growing interest in robotic tools and probes that are able to work within these confined and difficult environments. Examples of such systems are borescopes and continuum or compliant robots. Furthermore, outside of engineering purposes, there is a growing interest in flexible robotics for use in medical and health application, such as endoscopes and key-hole surgery.

However, despite the growing maturity of these hyper-redundant probes and robots there are still issues with their operation. One such issue is that these robots and probes are long snake like objects that can be heavy, and their weight can be unevenly distributed, with the heavier section of the probe or robot at the distal end where the tools or more compliant sections are housed. This makes the feeding of the robot into the access port or the entrance to the work area difficult. The feeding process is typically carried out by hand with an operator manually feeding the probe or robot into the workspace or body. Such an action places strain on the operator especially in cases where the access is in a difficult or awkward to reach area. In such cases the operator will have to support the weight of a large portion of the probe or robot whilst having to manually feed the length of it into the work area. This means that a skilled operator is required to do this as they have to be able to understand the process and forces involved; this reduces any form of automation of the process as each inspection will be unique as there is no computer control of the system. However, the weight of the robot and the positioning can place strain on the body which can result in injury. Consequently, it is desirable to improve the setup for feeding such robots into the workspace or body.

United States patent US 10670538 B2 discloses a probe driver that has a coupling that interfaces with a conduit section at a first position of the conduit section. The probe driver also has one or more positioning elements to reposition the conduit section to interface with the coupling at a second position of conduit section in response to one or more commands based on a recorded inspection. The probe driver is part of a non-destructive testing system for detecting undesired equipment conditions in power generation plants.

European patent application EP 4091774 A1 discloses a mechanism and a method for inserting an elongate member through an aperture of a body, along a longitudinal axis. The mechanism has a feed portion that has a feed actuator that is configured to engage with and drive the elongate member along the longitudinal axis, and a twist portion that has a twist actuator that is configured to engage with the feed portion and rotate the elongate member about the longitudinal axis.

D. Alatorre Troncoso et al. "A Continuum Robot for Remote Applications: From Industrial to Medical Surgery with Slender Continuum Robots" (2022) IIEE Robotics & Automation Magazine, vol. 30, no. 3, pages 94 to 105 discloses a modular snake robot that has both active tendon-driven and passively flexible segments and an actuation and control interface. The snake robot can be used in the inspection and maintenance of aeroengines.

### SUMMARY

The present invention provides a feed mechanism as set out in the appended claims.

According to the invention there is provided a feed mechanism for inserting and/or retracting a flexible robotic arm from an area as set out in claim 1.

An interchangeable core section may be provided, the core section comprising a feed section and cut aways sections, the feed section being the portion through which the robotic arm is inserted, and the cut away sections allowing the drive wheels to pass into the core section and to connect with the flexible robotic arm when present, the core section having a diameter suitable for the robotic arm.

The drive motor of the drive portion may be connected to a sub-frame within the housing, the drive motor providing rotational movement to a first drive shaft which is connected to a spur gear system, the spur gear system is connected to a second drive shaft having a worm wheel and a pair of roller bearings mounted on either side of the worm wheel, the worm wheel being coupled to a pair of worm gears that are mounted about their rotational axes and connected to drive wheel drive shafts, with each drive shaft having a pair of roller bearings mounted either side of a drive wheel.

The rotational portion may comprise an electric motor coupled to a frame, the electric motor being connected to a spur pinion that is coupled to a spur gear, the spur gear being attached to an axle with a pair of bearing races connected either side of a worm gear, the worm gear being coupled to a worm wheel which is mounted about the outer face of the drive portion.

The spur gear systems may be coupled to an encoder so that the positional movement of the flexible robotic arm can be determined.

The drive wheels of the drive portion may be coated with polyurethane, or natural or artificial rubber.

The feed mechanism may be provided with a light gate to determine the position of the flexible robotic arm within the feed mechanism.

The feed mechanism may be provided with a mount on the housing.

The feed mechanism may be provided with a flange that can be coupled to a mounting bracket.

The feed mechanism may be connected to a feed pipe, wherein the passageway extends continuously throughout the feed mechanism and into the feed pipe.

There may be two pairs of drive wheels, with the pairs of drive wheels being positioned at opposite sides of the housing.

The flexible robotic arm may be a borescope, an endoscope, a continuum arm, a snake robot, or a hyper-redundant robot.

### BRIEF DESCRIPTION OF THE DRAWINGS

Embodiments will now be described by way of example only, with reference to the Figures, in which:
FIG. 1 presents a rear perspective view of a feed portion of a mechanism according to the prior art without its housing;
FIG. 2 presents a cross sectional view along the longitudinal axis of a feed mechanism according to the present invention;
FIG. 3 presents an example of the drive portion of the feed mechanism of FIG. 2;
FIG. 4 presents an example of the twist portion of the feed mechanism of FIG. 2;
FIG. 5a presents an example an external perspective of an end of the housing of the feed mechanism of FIG. 2;
FIG. 5b presents a cut away of the set up in FIG. 5a; and
FIG. 6 presents an exemplary but unclaimed method of using a feed mechanism of the present invention.

### DETAILED DESCRIPTION

Aspects and embodiments of the present invention will now be discussed with reference to the accompanying figures. Further aspects and embodiments will be apparent to those skilled in the art.

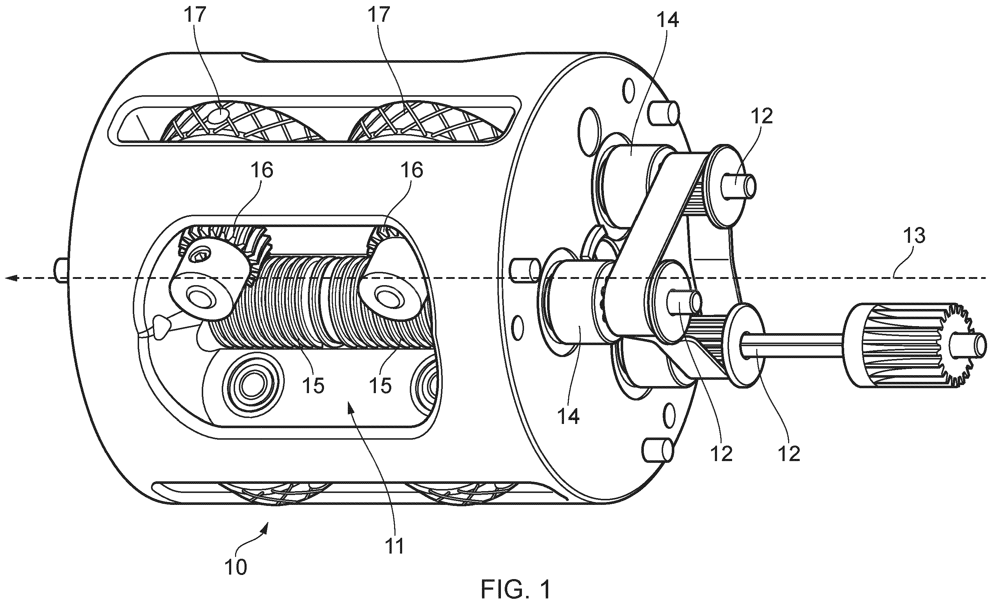

FIG. 1 presents a rear perspective view of the feed portion 10 without the housing according to the prior art. The feed portion comprises a feed actuator 11, which is configured in use, to engage with and to drive the flexible robotic arm along the longitudinal axis of the mechanism. The feed mechanism, therefore, is configured to drive the flexible robotic arm through the mechanism and into the desired workspace or body. The term flexible robotic arm is used to cover robotic arms such as borescopes, endoscopes, continuum arm, snake robots hyper redundant robots, and any other similar suitable device. A flexible robotic arm may also feature rigid section in addition to the flexible portion. A flexible robotic arm may also feature passive sections that are not controllable. The feed portion comprises one or more feed portions. The feed portions are configured about the passageway that runs through the mechanism and is configured to engage with and drive the flexible robotic arm along the passageway. In the example shown the feed actuator comprises three axial feed shafts 12. Each feed shaft is configured about the passageway such that the shafts 12 extends along axes which are parallel to, but radially offset from the longitudinal axis 13. This radial offset is fixed so that the device is configured so that only a fixed size flexible robotic arm can be driven through the mechanism. The feed actuator comprises three axial shafts. Each feed shaft is configured within roller bearings 14 at either side of the respective shaft and comprises worm gears 15. Each worm gear moves a respective worm wheel 16, wherein the worm wheels are mounted on a worm wheel shaft. The worm wheels are mounted to the worm wheel shaft via a wheel and are supported by two roller bearings. Each of the worm wheels drives a wheel 17. A tangent of each wheel at the point of engagement with the flexible robotic arm extends parallel to but radially offset to the longitudinal axis. The offset is fixed to the radius of the flexible robotic arm. In use the wheels grip the flexible robotic arm and rotate in order to drive the flexible robotic arm along the longitudinal axis. One of the difficulties with the use of such a system is that it can only be used on a fixed diameter robot. Therefore, if a different diameter robot or probe is required, to perform the desired task, the system requires a separate mechanism to feed the flexible robotic arm into the area of interest.

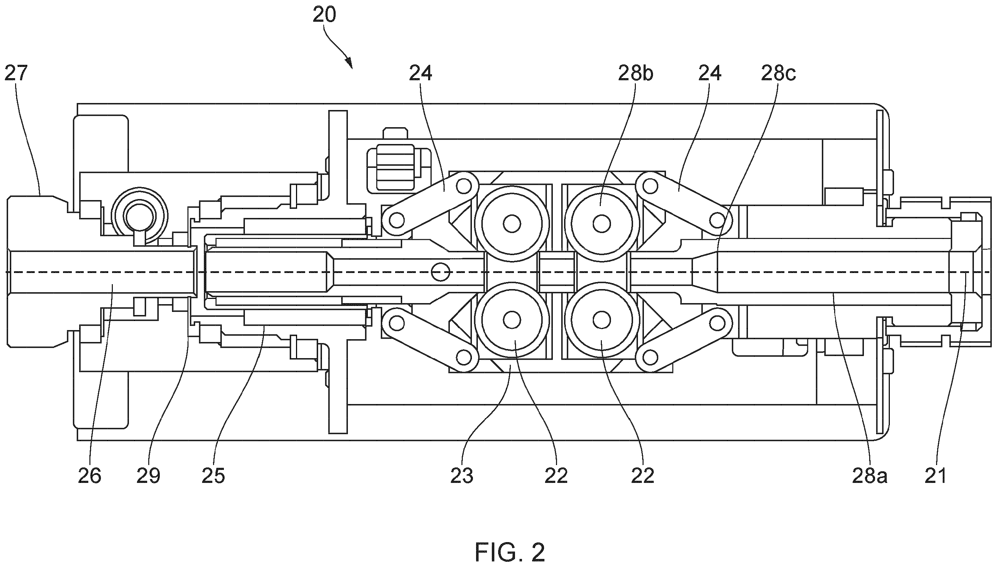

FIG. 2 presents a cross sectional view along the longitudinal axis of the feed mechanism according to the present invention. The feed mechanism 20 comprises a flexible robotic arm that extends along a longitudinal axis 21. A passageway is formed to allow the flexible robotic arm to pass through, with its centre being along the longitudinal axis. The flexible robotic arm is driven through the mechanism by a plurality of drive wheels 22 that are used to engage with pressure against the flexible robotic arm, so as to add friction to the cable so that it can be moved along the longitudinal axis 21. The drive wheels are driven via a worm gear having a spur reduction. Each of the drive wheels may be driven. Alternatively, only one set of drive wheels can be used, and the other drive wheels being used for guiding and rotating by through friction with the robotic arm. The drive wheels may be coated with polyurethane, or natural or artificial rubber to provide extra grip. The drive wheels may be mounted in pairs. The drive wheels are mounted to a frame or carriage 23 that is connected pivotally via a pair of linkage bars 24. The frame or carriage is mounted on linear bearings. The frame or carriage houses a compression spring that reacts between the carriage and the robotic arm in the core. The compression springs interaction with the frame creates tension in the linkage mechanism and therefore acts to preload forces between the drive wheels and the robotic arm. The frame extends longitudinally along part of the length of the mechanism. The spring extends along the axis of the central passageway and has a set tension. The tension is set so that the wheels on the carriage are configured to contact the outside of the flexible robotic arm when it is set to the smallest diameter of flexible robotic arm to be used. Due to the spring tension the wheels are forced down against the flexible robotic arm; this along with the coating helps to maintain frictional contact with the flexible robotic arm. In order to use different size robot arms the feed core 28a, 28b, and 28c of the feed mechanism can be changed. The screw is then used to keep the core in place and to compress the spring. Alternatively, a screw may be employed to provide a means of adjusting the tension of the spring. The screw can be used to adjust the length of the spring relative to a fixed end. The screw is controlled by rotation of knob 27. Alternatively, the tension on the springs may be preloaded. The advantage of this configurations is that the pivotable linkages are able to change their angle so that the radial spacing between the wheels and the longitudinal axis is increased. This allows the feed mechanism to take larger diameter flexible robotic arms. There may be a single pair of mounted wheels, so that only one side of the feed mechanism expands in the radial direction. However, to allow for a centred feed about the mechanism, two or more pairs of wheels may be mounted in pairs and connected to the springs. Such a configuration also increases the friction that acts between the drive wheels and the flexible robotic arm. The drive wheels may be mounted to a carriage. The mounting can be coupled to the linkage pins, so that the wheels move together. The mounting may extend around the wheels and connect to bearings with the wheel axis running through them. There may be four pairs of drive wheels each mounted perpendicular about the longitudinal axis, or alternatively there may be 3 drive wheels orientated at 120° about the longitudinal axis. However, the example shown in FIG. 2 has only two pairs of wheels. Such a configuration allows for the electrical connections to be added into the housing and to maintain it as a convenient size and shape.

About the longitudinal axis there is a feed core or passageway 26. The feed core comprises a central tube 28a that allows for easy feed of the flexible robotic arm. There is a plurality of cut away sections 28b of the feed core that allow access for the drive wheels, as discussed above, to extend into the feed core. The cut away sections are so sized to allow the drive wheels to move deeper towards the longitudinal axis within the core; this allows the wheels to move relative to the size of the flexible robotic arm that is being used. The feed core is shown having a taper section 28c; this makes the feeding of the flexible robotic arm easier as it can be fed into the rear of the feed core. The feed core may be interchangeable. The drive mechanism may be coupled to an encoder, so that it is possible to detect a slip on any of the drive wheels that are powered to move the flexible robotic arm. Any slip, if undetected, could potentially result in an incorrect determination of the amount of flexible robotic arm that has been inserted into the workspace, which could potentially result in damage of the tool, probe or the flexible robotic arm itself. A light gate may also be used to detect a presence of the flexible robotic arm within the mechanism. The light gate may be positioned after the drive wheels and can determine the position when the robot is first inserted into the device and fed beyond the light gate.

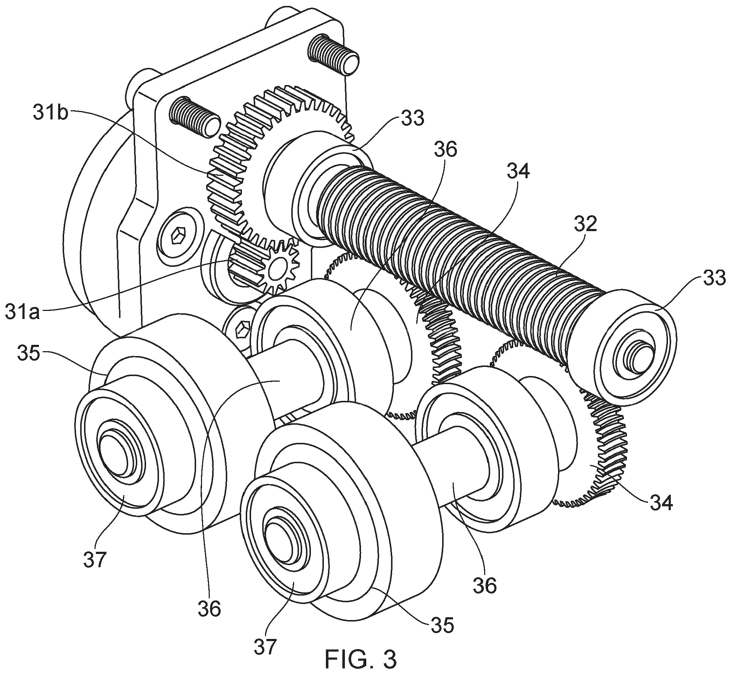

FIG. 3 also presents the twist portion 29 of the feed mechanism which is positioned at the end of the mechanism. The twist portion of the feed mechanism comprises a worm gear that is provided around the passageway 26. The worm gear is connected to a worm wheel. The passageway is connected to the feed mechanism, which is rotatably mounted within the housing, so that rotation by the twist portion of the feed mechanism results in rotation of the feed mechanism. This in turn rotates the flexible robotic arm, which is gripped by the drive wheels of the drive portion of the feed mechanism.

In use the flexible robotic arm is fed into the feed core of the mechanism and inserted until it connects with the drive wheels. This can be through the use of an interchangeable feed core that is sized to use with the size of the robotic arm. The different feed cores can be provided to cover a small range of diameters: for example, for a 6 mm robot a core may cover 5.5-6.5 mm, or for a 12 mm robot the core may accommodate 11-13 mm. For example, suitable core sizes may be 6 mm, 8 mm, 10 mm and 12 mm. Other suitable size diameters can be used. Alternatively, the tension of the drive spring is reduced prior to insertion to allow for easy motion of the flexible robotic arm passed the drive wheels. Depending upon the accuracy and the size range of the different flexible robotic arms being used the tension of the spring may not need to be changed manually. In cases where there is only a small difference the tension can be set for the smallest diameter of the flexible robotic arm and when a larger diameter flexible robotic arm is inserted the member acts against the wheels and increases the tension on the springs. The movement of the tensioning springs may be achieved automatically using a drive motor with a torque limiter rather than through the use of a knob. Once the system is in this position the mechanism is ready and it can be coupled to the area for deployment if it has not already been positioned there already and the system can be deployed. In this position the flexible robotic arm of any size can be fed into the work area and the twisted to the desired position within the work area.

FIG. 3 presents an example of the drive portion of the feed mechanism. The drive portion 30 comprises an electrical motor that is connected to a sub-frame within the housing mechanism. The electrical motor provides rotational movement of a drive shaft when a voltage is applied by the operator to drive the feed mechanism. The electrical motor is connected to a spur gear system, which is shown comprising of two gears. In this case the first gear 31a is connected to the drive shaft of the electrical mechanism, whilst a second gear 31b is driven by the first gear. The second gear is connected to a drive shaft which has a worm wheel 32 mounted at the centre of the drive shaft with a pair of roller bearings 33 mounted on either side of the worm wheel. The worm wheel is coupled to a pair of worm gears 34. The worm gears are mounted about rotational axes and connected to the drive wheel drive shafts that rotate about this rotational axis. The drive shafts 36 have a pair of roller bearings 37 mounted upon them. The drive shafts have the drive wheels 35 connected to them. The drive wheels are also shown having an outer layer that is used to connect it to the flexible robotic arm.

In use, when a voltage is applied to the electrical motor, it is able to rotate clockwise or anticlockwise. The drive from the motor is passed to the spur gears which rotate the worm wheel. The rotation of the worm wheel is passed onto the worm gears and results in their rotation. As the worm gears are connected to the drive shaft this causes rotation of the worm gear. The rotation of the drive shaft causes rotation of the drive wheels, which causes a linear movement of the flexible robotic arm about the longitudinal axis. As the motor can rotate both clockwise and anticlockwise it means that the drive wheels can move the flexible robotic arm both forwards and backwards allowing the flexible robotic arm to be moved in and out of the workspace.

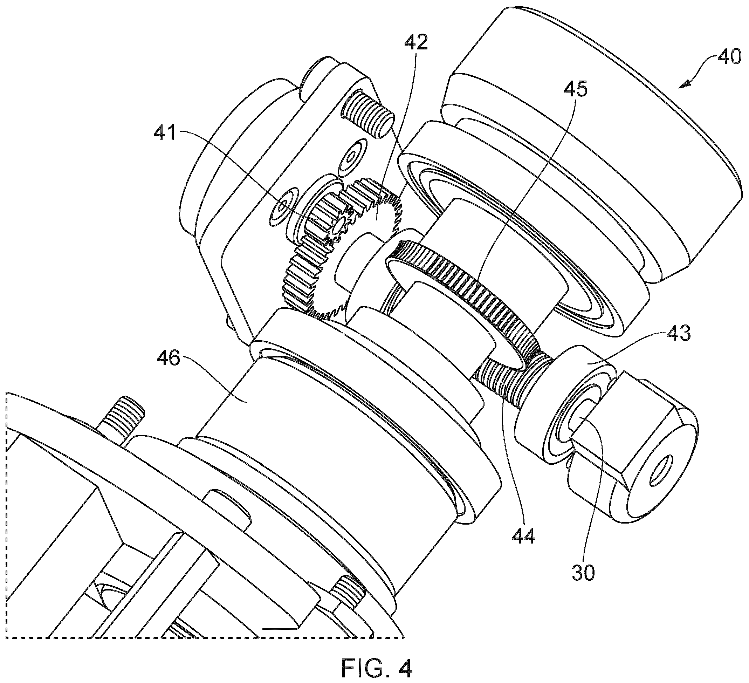

FIG. 4 presents an example of the twist portion of the feed mechanism. The twist portion comprises an electric motor coupled to a frame. The electric motor is connected to a spur pinion 41. The spur pinion is coupled to a spur gear 42 which is attached to an axle or worm shaft. The axle is coupled to a pair of bearing races 43 which has a worm gear 44 mounted between the bearing races. The worm gear couples with a worm wheel 45 which is mounted about the outer face of the drive portion of the feed mechanism 46. In use the twist portion is able to rotate the drive portion about the longitudinal axis within the housing. An encoder may be coupled to the worm shaft or axle so that the state of twist of the flexible robotic arm can be determined. Hard stops may be used to prevent over rotation of the flexible robotic arm, which may damage the robot in use. The presence of the spur gear system means that a controlled speed of rotation can be achieved from the motor; thus, increasing the usability and dexterity of the flexible robotic arm.

In use a voltage is applied to the twist drive motor; this is determined from a signal that determines the required amount of rotation. The signal may be based upon a history of the signals applied and/or any signals provided by an encoder as to the position, and/or by information from the tool or probe on the end of the flexible robotic arm. In order to accurately know the position, the flexible robotic arm may be fed into the feed mechanism is a set way so that the total position of the flexible robotic arm is known. The twist motor is able to rotate the pinion gear and thus turn the spur gear. The spur gear being connected to the worm shaft and gear means that worm gear rotates. This rotation of the worm gear in turn drives the worm wheel and thus the rotation portion of the feed mechanism within the housing. With the flexible robotic arm in the drive portion of the feed mechanism the body of the robot can be rotated into a suitable position so as to bring the tool or probe on the end of the flexible robotic arm into position relative to the component or workpiece.

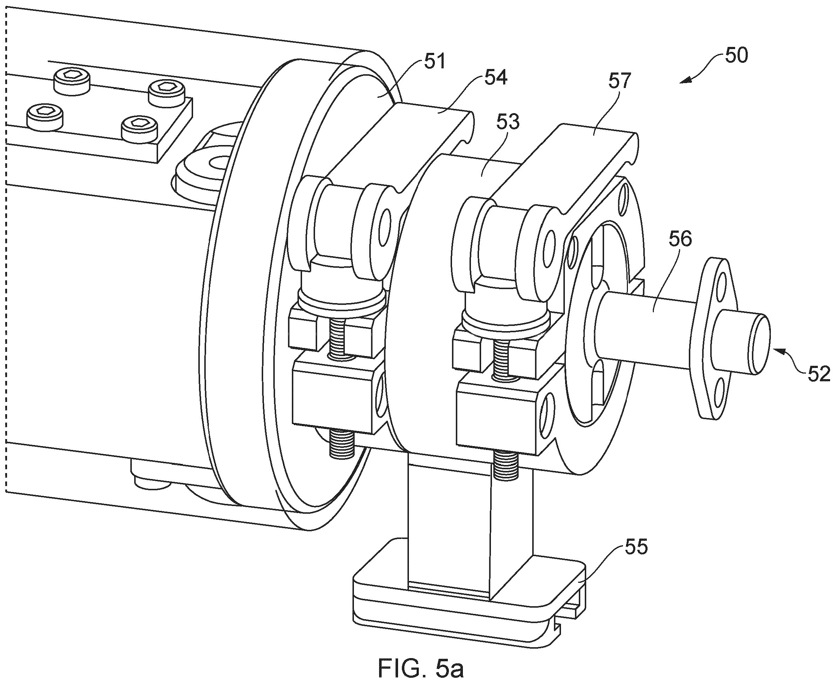

All of the components may be enclosed within a housing. The housing may be made of any suitable material, for example this may be a metallic, composite or plastics material. The end of the housing may be provided with a flange, to allow it to couple with the housing or a support. FIG. 5a presents an example an external perspective of an end of the housing 50. The distal end of the housing 51 has an end wall that covers the mechanical and the electrical components within the mechanism. The end wall has a flange extending therefrom. Through the centre of the flange is passageway, which forms an extension of the passageway that passes through the mechanism. The continuation of the passageway 52 allows the flexible robotic arm to pass through the feed mechanism smoothly. The flange is provided with a coupling face to allow it to couple with another component if required. In the example shown in FIG. 5a the flange is paired with a mount 53. The mount and the flange are held together by a ring clamp 54. However, if needed they could also be held to together by bolting the components together, or other suitable mechanisms. The mount shown has a mounting passageway that aligns with the passageway that extends through the mechanism. The mount also features a projection that has a support plate 55. The support plate may be shaped to couple with a tripod, or other similar support structure so that the mechanism is held in the required position relative to the inspection port. Alternatively, the projection may be a permanent physical mount to a support structure that is configured to hold the feed mechanism at a set position. For example, if the feed mechanism is used in medicine, it may be a mount directly to an operating table, alternatively, if the feed mechanism is used for telecommunications cables, then the support may be a stand that positions it about the access hole for the cables. In use the mount is there to take the weight and the associated forces away from any couplings that may become damaged. In FIG. 5a the mount is further coupled to a feed tube 56. In this the mount also has a mounting face and flange that allows it to abut and couple with the feed tube. In FIG. 5a the mount and the feed tube are clamped together by a ring clamp 57. However, any other suitable clamping mechanism can be used. The feed tube is shown having a short protrusion that leads into a coupling face. The protrusion may be any suitable length and may be both solid or flexible. The coupling face may be a threaded a plate as shown to allow the device to be abutted or clamped to a mounting face of the workpiece to be investigated. Alternatively, the coupling face may be a screw thread that allows the device to be coupled to a port, such as a borescope port. The feed pipe may be coupled to a number of different fittings that allow the mechanism to be readily coupled with different ports on the device to be inspected and/or repaired.

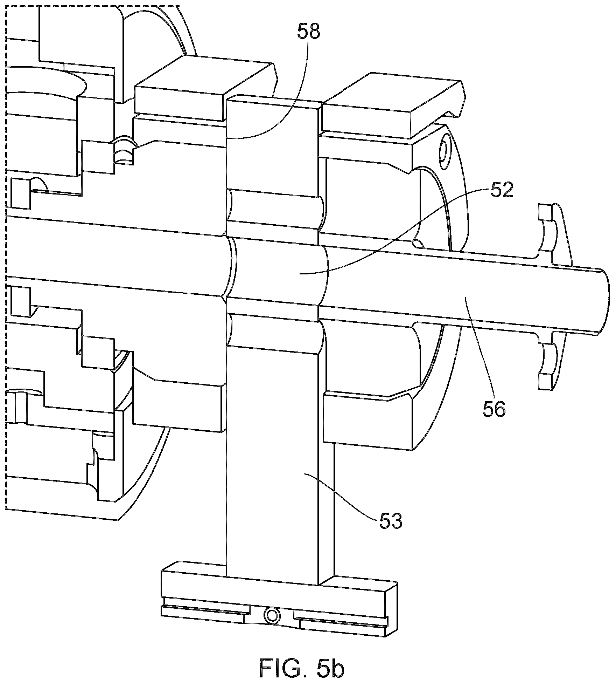

FIG. 5b presents a cut away of the set up in FIG. 5a. In this it can be seen how the body of the mechanism, with the passageway 52 connects to the flange 58. This in turn couples to the mount 53 and then to the feed pipe 56. The passageway is maintained throughout and allows for smooth passage of the flexible robotic arm. The connector at the end of the feed pipe, if attached to the port, results in coaxial coupling of the for the flexible robotic arm with the portal and thus provides easy entrance. Although, in this example it is presented that there is a sperate mounting fixture. Instead, the mounting may be positioned on the housing or casing of the mechanism. In such a case, the flange may be directly coupled to the feed tube.

The feed mechanism may be coupled to a controller. The controller is provided to control the motion of the motors that drive the twist and drive portions of the mechanism. The controller may be coupled to a computer; this may be a PC, Laptop, tablet or phone or other suitable device having the computing power to be able run a computer program that is, as a minimum, able to interface with and provide control signals to the controller. The computing device may be used in cooperation with or may be incorporated into a controller. Such a controller may be a joystick and allow the operator to control the operation from that. The controller may also include haptic controls to provide feedback to the operator. Such a device could provide signals regarding if the flexible robotic arm has been snagged within the system or if there are frictional issues with the insertion and/or retraction of it. The computer may have a visual display connected to it to provide information on the status of the operation to an operator. Such information may include the extent to which the flexible robotic arm has been inserted into the workspace, angle of rotation of the twist mechanism. The computer may be the same as the one that operates the control of the flexible robotic arm and as all the control and information may be provided on the screen to the operator.

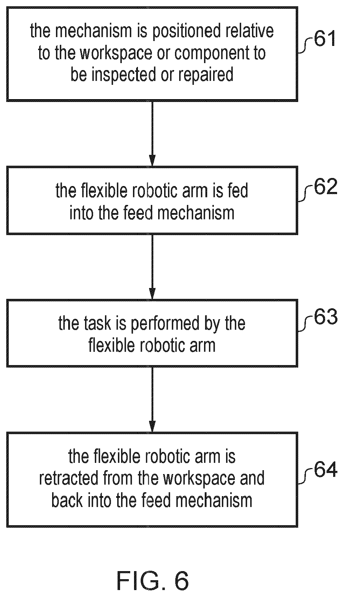

FIG. 6 presents an exemplary method of using a feed mechanism of the present invention. In step 61 the mechanism is positioned relative to the workspace or component to be inspected or repaired. In some cases, such as that presented in FIGS. 5a and 5b the mechanism first has a mounting coupling attached to the mechanism. In cases in which there is a threaded access port such as a gas turbine engine the feed pipe may be screwed onto the access port and then there is a direct link between the feed mechanism and the workpiece. The positioning of the feed mechanism may be done by mounting it on a tripod or support, the workpiece or on a mount on the workpiece which is able to support a portion of the weight of the device and of the flexible robotic arm. In step 62 the flexible robotic arm is fed into the feed mechanism. Prior to this if required the spring tension can be adjusted by the movement of the screw. The flexible robotic arm may be inserted into the feed mechanism in a fixed orientation, such that when the twist portion is used there is a known position of the robot at the initial stage. Alternatively, an optical marker may be used on the flexible robotic arm which can be detected by an optical sensor within the feed mechanism. A light curtain can be used to determine the position of the flexible robotic arm within the feed mechanism. With the flexible robotic arm positioned within the feed mechanism, it can be activated to progress the flexible robotic arm into the workspace and to twist the body of the flexible robotic arm as appropriate until the head of the flexible robotic arm is positioned in the desired orientation and position. In step 63 the task is performed by the flexible robotic arm. In step 64 the flexible robotic arm is retracted from the workspace and back into the feed mechanism. In this the flexible robotic arm may be rotated to return it to its original orientation.

## Claims

1. A feed mechanism (20) for inserting and/or retracting a flexible robotic arm from an area, the feed mechanism (20) comprising:
a housing;
a passageway (26, 52) for the flexible robotic arm that extends about a central longitudinal axis (13) through the length of the housing;
a drive portion (30) for moving the flexible robotic arm within the passageway (26, 52), the drive portion not being fixedly connected within the housing; and
a rotational portion (29) being coupled to a rotational motor, the rotational motor having a gear system that connects to the drive portion (30) and causes a rotation of the drive portion about the central longitudinal axis (13) within the housing;
the feed mechanism (20) being **characterised in that** the drive portion (30) has at least one pair of drive wheels (35) coupled to a drive motor, the drive wheels (35) are connected to a mounting frame (23) with the mounting frame being connected to pivotable linkages (24) with at least one of the linkages being connected to a spring, such that the expansion or contraction of the spring allows the drive wheels (35) to move relative to the central longitudinal axis (13), and the spring is coupled to a threaded screw coupled to a knob (27), so that rotation of the screw by turning the knob (27) causes a variation in the length of the spring.

2. The feed mechanism (20) of claim 1, further comprising an interchangeable feed core comprising a central tube (28a) that allows for the feed of the flexible robotic arm, the central tube having a plurality of cut away sections (28b) that allow access for the drive wheels (35) to extend into the feed core, and wherein the feed core can be removed and replaced with a different feed core having a different diameter to accommodate different sized flexible robotic arms.

3. The feed mechanism (20) of claim 1 or 2, wherein the drive motor of the drive portion (30) is connected to a sub-frame within the housing, the drive motor providing rotational movement to a first drive shaft which is connected to a spur gear system (31a, 31b), the spur gear system is connected to a second drive shaft having a worm wheel (32) and a pair of roller bearings (33) mounted on either side of the worm wheel, the worm wheel being coupled to a pair of worm gears (34) that are mounted about their rotational axes and connected to drive wheel drive shafts (36), with each drive shaft (36) having a pair of roller bearings (37) mounted either side of a drive wheel (35).

4. The feed mechanism (20) of any preceding claim, wherein the rotational motor of the rotational portion (29) comprises an electric motor coupled to a frame, the electric motor being connected to a spur pinion (41) that is coupled to a spur gear (42), the spur gear being attached to an axle with a pair of bearing races (43) connected either side of a worm gear (44), the worm gear being coupled to a worm wheel (45) which is mounted about the outer face of the drive portion (30).

5. The feed mechanism (20) of claim 3 or 4, wherein the spur gear system (31a, 31b, 41, 42) is coupled to an encoder so that the positional movement of the flexible robotic arm can be determined.

6. The feed mechanism (20) of any preceding claim, wherein the drive wheels (35) of the drive potion (30) are coated with polyurethane, or natural or artificial rubber.

7. The feed mechanism (20) of any preceding claim, wherein the feed mechanism is provided with a light gate to determine the position of the flexible robotic arm within the feed mechanism.

8. The feed mechanism (20) of any preceding claim, wherein the feed mechanism is provided with a mount (53) on the housing.

9. The feed mechanism (20) of any one of claims 1 to 6, wherein the feed mechanism is provided with a flange (58) that can be coupled to a mounting bracket.

10. The feed mechanism (20) of any preceding claim, wherein the feed mechanism is connected to a feed pipe, wherein the passageway (52) extends continuously throughout the feed mechanism and into the feed pipe.

11. The feed mechanism (20) of any preceding claim, wherein there are two pairs of drive wheels (35), with the pairs of drive wheels being positioned at opposite sides of the housing.

12. The feed mechanism (20) of any preceding claim, wherein the flexible robotic arm is a borescope, an endoscope, a continuum arm, a snake robot, or a hyper-redundant robot.

## Patentansprüche

1. Vorschubmechanismus (20) zum Einführen und/oder Zurückziehen eines flexiblen Roboterarms aus einem Bereich, wobei der Vorschubmechanismus (20) Folgendes umfasst:
ein Gehäuse;
einen Durchgang (26, 52) für den flexiblen Roboterarm, der sich um eine zentrale Längsachse (13) durch die Länge des Gehäuses erstreckt;
einen Antriebsabschnitt (30) zum Bewegen des flexiblen Roboterarms innerhalb des Durchgangs (26, 52), wobei der Antriebsabschnitt nicht fest innerhalb des Gehäuses verbunden ist; und
einen Drehabschnitt (29), der an einen Drehmotor gekoppelt ist, wobei der Drehmotor ein Getriebesystem aufweist, das sich mit dem Antriebsabschnitt (30) verbindet und eine Drehung des Antriebsabschnitts um die zentrale Längsachse (13) innerhalb des Gehäuses bewirkt;
wobei der Vorschubmechanismus (20) **dadurch gekennzeichnet ist, dass** der Antriebsabschnitt (30) mindestens ein Paar von Antriebsrädern (35) aufweist, die an einen Antriebsmotor gekoppelt sind, wobei die Antriebsräder (35) mit einem Montagerahmen (23) verbunden sind, wobei der Montagerahmen mit schwenkbaren Gestängen (24) verbunden ist, wobei mindestens eines der Gestänge mit einer Feder verbunden ist, so dass die Ausdehnung oder Kontraktion der Feder es den Antriebsrädern (35) ermöglicht, sich relativ zu der zentralen Längsachse (13) zu bewegen, und die Feder an eine Gewindeschraube gekoppelt ist, die an einen Knopf (27) gekoppelt ist, so dass eine Drehung der Schraube durch Drehen des Knopfs (27) eine Veränderung der Länge der Feder verursacht.

2. Vorschubmechanismus (20) nach Anspruch 1, ferner umfassend einen austauschbaren Vorschubkern, der ein zentrales Rohr (28a) umfasst, das den Vorschub des flexiblen Roboterarms ermöglicht, wobei das zentrale Rohr eine Vielzahl von ausgeschnittenen Sektionen (28b) aufweist, die einen Zugang für die Antriebsräder (35) ermöglichen, um sich in den Vorschubkern zu erstrecken, und wobei der Vorschubkern entfernt und durch einen anderen Vorschubkern mit einem anderen Durchmesser ersetzt werden kann, um flexible Roboterarme unterschiedlicher Größe aufzunehmen.

3. Vorschubmechanismus (20) nach Anspruch 1 oder 2, wobei der Antriebsmotor des Antriebsabschnitts (30) mit einem Unterrahmen innerhalb des Gehäuses verbunden ist, wobei der Antriebsmotor eine Drehbewegung für eine erste Antriebswelle bereitstellt, die mit einem Stirnradsystem (31a, 31b) verbunden ist, das Stirnradsystem mit einer zweiten Antriebswelle verbunden ist, die ein Schneckenrad (32) und ein Paar von Wälzlagern (33) aufweist, die beiderseits des Schneckenrads montiert sind, wobei das Schneckenrad an ein Paar von Schneckengetrieben (34) gekoppelt ist, die um ihre Drehachsen montiert und mit Antriebsradantriebswellen (36) verbunden sind, wobei jede Antriebswelle (36) ein Paar von Wälzlagern (37) aufweist, die beiderseits eines Antriebsrads (35) montiert sind.

4. Vorschubmechanismus (20) nach einem vorhergehenden Anspruch, wobei der Drehmotor des Drehabschnitts (29) einen Elektromotor umfasst, der an einen Rahmen gekoppelt ist, wobei der Elektromotor mit einem Stirnritzel (41) verbunden ist, das an ein Stirnrad (42) gekoppelt ist, wobei das Stirnrad an einer Achse mit einem Paar von Lagerringen (43) befestigt ist, die beiderseits eines Schneckengetriebes (44) verbunden sind, wobei das Schneckengetriebe an ein Schneckenrad (45) gekoppelt ist, das um die Außenfläche des Antriebsabschnitts (30) montiert ist.

5. Vorschubmechanismus (20) nach Anspruch 3 oder 4, wobei das Stirnradsystem (31a, 31b, 41, 42) an einen Encoder gekoppelt ist, so dass die Positionsbewegung des flexiblen Roboterarms bestimmt werden kann.

6. Vorschubmechanismus (20) nach einem vorhergehenden Anspruch, wobei die Antriebsräder (35) des Antriebsabschnitts (30) mit Polyurethan oder natürlichem oder künstlichem Gummi beschichtet sind.

7. Vorschubmechanismus (20) nach einem vorhergehenden Anspruch, wobei der Vorschubmechanismus mit einer Lichtschranke versehen ist, um die Position des flexiblen Roboterarms innerhalb des Vorschubmechanismus zu bestimmen.

8. Vorschubmechanismus (20) nach einem vorhergehenden Anspruch, wobei der Vorschubmechanismus mit einer Halterung (53) am Gehäuse versehen ist.

9. Vorschubmechanismus (20) nach einem der Ansprüche 1 bis 6, wobei der Vorschubmechanismus mit einem Flansch (58) versehen ist, der an eine Montagehalterung gekoppelt werden kann.

10. Vorschubmechanismus (20) nach einem vorhergehenden Anspruch, wobei der Vorschubmechanismus mit einem Vorschubrohr verbunden ist, wobei sich der Durchgang (52) durchgehend durch den Vorschubmechanismus und in das Vorschubrohr erstreckt.

11. Vorschubmechanismus (20) nach einem vorhergehenden Anspruch, wobei es zwei Paare von Antriebsrädern (35) gibt, wobei die Paare von Antriebsrädern an gegenüberliegenden Seiten des Gehäuses positioniert sind.

12. Vorschubmechanismus (20) nach einem vorhergehenden Anspruch, wobei der flexible Roboterarm ein Boroskop, ein Endoskop, ein Kontinuumsarm, ein Schlangenroboter oder ein hyperredundanter Roboter ist.

## Revendications

1. Mécanisme d'alimentation (20) pour insérer et/ou rétracter un bras robotique flexible à partir d'une zone, le mécanisme d'alimentation (20) comprenant :
un boîtier ;
un passage (26, 52) pour le bras robotique flexible qui s'étend autour d'un axe longitudinal central (13) à travers la longueur du boîtier ;
une partie d'entraînement (30) pour déplacer le bras robotique flexible au sein du passage (26, 52), la partie d'entraînement n'étant pas reliée de manière fixe au sein du logement ; et
une partie rotative (29) étant couplée à un moteur de rotation, le moteur de rotation présentant un système d'engrenage qui se relie à la partie d'entraînement (30) et provoque une rotation de la partie d'entraînement autour de l'axe longitudinal central (13) au sein du boîtier ;
le mécanisme d'alimentation (20) étant **caractérisé en ce que** la partie d'entraînement (30) présente au moins une paire de roues d'entraînement (35) couplées à un moteur d'entraînement, les roues d'entraînement (35) sont reliées à un châssis de montage (23), le châssis de montage étant relié à des liaisons pivotantes (24), au moins une des liaisons étant reliée à un ressort, de sorte que la détente ou la contraction du ressort permette aux roues d'entraînement (35) de se déplacer par rapport à l'axe longitudinal central (13), et le ressort est couplé à une vis filetée couplée à un bouton (27), afin que la rotation de la vis en faisant tourner le bouton (27) provoque une variation de la longueur du ressort.

2. Mécanisme d'alimentation (20) de la revendication 1, comprenant en outre un noyau d'alimentation interchangeable comprenant un tube central (28a) qui permet l'alimentation du bras robotique flexible, le tube central présentant une pluralité de sections découpées (28b) qui permettent l'accès aux roues d'entraînement (35) pour qu'elles s'étendent dans le noyau d'alimentation, et dans lequel le noyau d'alimentation peut être retiré et remplacé par un noyau d'alimentation différent présentant un diamètre différent pour s'adapter à des bras robotiques flexibles de tailles différentes.

3. Mécanisme d'alimentation (20) de la revendication 1 ou 2, dans lequel le moteur d'entraînement de la partie d'entraînement (30) est relié à un sous-châssis au sein du boîtier, le moteur d'entraînement fournissant un mouvement de rotation à un premier arbre d'entraînement qui est relié à un système d'engrenage droit (31a, 31b),
le système d'engrenage droit est relié à un second arbre d'entraînement présentant une roue à vis sans fin (32) et une paire de roulements à rouleaux (33) montés de chaque côté de la roue à vis sans fin, la roue à vis sans fin étant couplée à une paire d'engrenages à vis sans fin (34) qui sont montés autour de leurs axes de rotation et reliés à des arbres d'entraînement (36) de roue d'entraînement, chaque arbre d'entraînement (36) présentant une paire de roulements à rouleaux (37) montés de chaque côté d'une roue d'entraînement (35).

4. Mécanisme d'alimentation (20) d'une quelconque revendication précédente, dans lequel le moteur rotatif de la partie rotative (29) comprend un moteur électrique couplé à un châssis, le moteur électrique étant relié à un pignon droit (41) qui est couplé à un engrenage droit (42), l'engrenage droit étant attaché à un axe par une paire de bagues de roulement (43) reliées de chaque côté d'un engrenage à vis sans fin (44), l'engrenage à vis sans fin étant couplé à une roue à vis sans fin (45) qui est montée autour de la face extérieure de la partie d'entraînement (30).

5. Mécanisme d'alimentation (20) de la revendication 3 ou 4, dans lequel le système d'engrenage droit (31a, 31b, 41, 42) est couplé à un codeur afin que le mouvement de position du bras robotique flexible puisse être déterminé.

6. Mécanisme d'alimentation (20) d'une quelconque revendication précédente, dans lequel les roues d'entraînement (35) de la partie d'entraînement (30) sont revêtues de polyuréthane, ou de caoutchouc naturel ou artificiel.

7. Mécanisme d'alimentation (20) d'une quelconque revendication précédente, dans lequel le mécanisme d'alimentation est doté d'une barrière lumineuse pour déterminer la position du bras robotique flexible au sein du mécanisme d'alimentation.

8. Mécanisme d'alimentation (20) d'une quelconque revendication précédente, dans lequel le mécanisme d'alimentation est doté d'une monture (53) sur le boîtier.

9. Mécanisme d'alimentation (20) de l'une quelconque des revendications 1 à 6, dans lequel le mécanisme d'alimentation est doté d'une bride (58) qui peut être couplée à un support de montage.

10. Mécanisme d'alimentation (20) d'une quelconque revendication précédente, dans lequel le mécanisme d'alimentation est relié à un tuyau d'alimentation, dans lequel le passage (52) s'étend de manière continue à travers le mécanisme d'alimentation et dans le tuyau d'alimentation.

11. Mécanisme d'alimentation (20) d'une quelconque revendication précédente, dans lequel il y a deux paires de roues d'entraînement (35), les paires de roues d'entraînement étant positionnées de côtés opposés du boîtier.

12. Mécanisme d'alimentation (20) d'une quelconque revendication précédente, dans lequel le bras robotique flexible est un boroscope, un endoscope, un bras continu, un robot serpent ou un robot hyper-redondant.
